# EUROPÄISCHE PATENTANMELDUNG

(11) **EP 3 290 865 A2**
(43) Veröffentlichungstag der Anmeldung: **07.03.2018**
(21) Anmeldenummer: 17179759.0
(22) Anmeldetag: 05.07.2017
(51) Int. Cl.: G01C 21/32

(54) **VERFAHREN ZUR ERMITTLUNG VON GEWÄSSERFLÄCHEN AUS OSM-DATEN**

(30) Priorität: 29.08.2016 DE 102016216218
(71) Anmelder: Robert Bosch GmbH, 70442 Stuttgart (DE)
(72) Erfinder: Otte, Dirk, 30880 Laatzen (DE)

(57) **Zusammenfassung**

Die Erfindung betrifft ein Verfahren zur Ermittlung von Gewässerflächen (11) auf Grundlage von OSM-Daten, wobei das Verfahren wenigstens die folgenden Schritte aufweist: Einlesen aller Daten aus der OSM-Datenquelle, die ganz oder teilweise in einem definierten rechteckigen Einlesegebiet (12) liegen, Abschneiden aller aus diesem Gebiet (12) hinausragenden Flächen und Küstenlinien, wobei die Küstenlinien hierzu jeweils am Einleserand (14) des Einlesegebietes (12) aufgetrennt werden, Verfolgen der zuvor aus mehreren einzelnen Küstenlinienstücken bestehenden Küstenlinie (13), Zusammensetzen der einzelnen Küstenlinienstücke zu einer durchgängigen Küstenlinie (13), wobei die durchgängige Küstenlinie (13) am Rand des Einlesegebietes (12) beginnt und endet und Vervollständigen der Küstenlinie (13) mit den Randlinien des Einleserandes (14) so weit, dass sich ein geschlossener Ring (15) aus Küstenlinien (13) und dem Einleserand (14) ergibt, der die Gewässerfläche (11) umschließt. Die Erfindung ist weiterhin gerichtet auf ein Computerprogrammprodukt zur Ausführung des Verfahrens, auf eine maschinenlesbare, insbesondere computerlesbare Datenstruktur erzeugt durch das Verfahren, auf ein Gerät zur Ausführung des Verfahrens und auf ein Navigationsgerät beinhaltend ein Gerät zur Ausführung des Verfahrens.

## Beschreibung

Die Erfindung betrifft ein Verfahren zur Ermittlung von Gewässerflächen auf Grundlage von OSM-Daten gemäß Anspruch 1.

### STAND DER TECHNIK

In Navigationssystemen werden Navigationsdaten dem Benutzer graphisch als Karten auf einem Display dargestellt. Auf den Karten sind Flächen, beispielsweise Bebauungsflächen oder Wasserflächen, Linien, beispielsweise Straßenlinien oder Eisenbahnlinien, und Punkte, beispielsweise Restaurants oder Tankstellen, gezeigt. Diese Navigationsdaten basieren in Navigationssystemen auf Rohdaten, die überwiegend von kommerziellen Anbietern beziehbar sind, und daher sind häufig für jedes Navigationssystem oder wenigstens für jeden Navigationsdatenträger Lizenzgebühren zu zahlen.

Weiterhin sind auch nicht-kommerzielle Datenquellen verfügbar, eines der bekanntesten Beispiele hierfür ist OpenStreetMap (OSM). In den frei erhältlichen OSM-Daten sind ebenfalls viele der für Navigations- und Darstellungszwecke notwendige Informationen enthalten. Jedoch sind in den OSM-Daten keine Gewässerflächen enthalten. Die Darstellung beispielsweise einer Europakarte ohne Gewässerflächen trifft aber zumeist nicht die Erwartung der Verbraucher.

Damit ist es das Ziel bei der Erstellung von Karten, möglichst nicht-kommerzielle Datenquellen nutzen zu können, und Gewässerflächen auf möglichst einfache Weise mit in die Kartendaten einzubeziehen.

Beispielsweise ist in der DE 10 2014 205 083 B3 ein Verfahren zum Erstellen von Straßenkarten mit Küstenlinien bekannt, und es ist vorgesehen, dass beispielsweise auch kostenfrei bereitstehende Daten mit Information über eine vorhandene Küstenlinie, die bei Bedarf zu ändern ist, erfasst werden, und wobei durch Fernerkundung gewonnene zusätzliche Daten erfasst werden. Weiterhin ist vorgesehen, dass ein erstes Koordinatensystem der vorhandenen Daten und ein zweites Koordinatensystem der durch Fernerkundung gewonnenen zusätzlichen Daten miteinander in Beziehung gesetzt werden, so dass für einen beliebigen Punkt in einem der Koordinatensysteme ein entsprechender Punkt in dem anderen der Koordinatensysteme ermittelbar ist. Weiterhin sieht das Verfahren vor, dass aus den Daten mehrere Positionen einer vorhandenen Küstenlinie ermittelt werden, und es werden Auswertungslinien festgelegt, die die Küstenlinie an den vorhandenen Positionen senkrecht kreuzen.

Schließlich werden durch Auswertung der zusätzlichen Daten entlang der Auswertungslinien ermittelt, an welcher Übergangsposition ein Übergang zwischen Wasser und Land vorhanden ist. Weiterhin wird die Küstenlinie jeweils durch Verschiebung der vorhandenen Positionen entlang der Auswertungslinie, die die entsprechende Position und eine entlang der Auswertungslinie ermittelte Übergangsposition enthält, auf die Übergangsposition verschoben, so dass eine geänderte Küstenlinie erzeugt werden kann.

Die vorhandenen Positionen der vorhandenen Küstenlinie können in unterschiedlicher Weise aus den vorhandenen Daten ermittelt werden. Z. B. ist in den vorhandenen Daten bereits ein Polygonzug der Küstenlinie vorhanden, der z. B. durch Vektoren beschrieben wird. Jeder Vektor definiert ein näherungsweise als geradlinig angenommenes Küstenliniensegment. Eine andere Möglichkeit besteht darin, aus vorhandenen Bilddaten, deren Bildelemente (Pixel) als entweder Wasserelement oder Landelement markiert sind, die Küstenlinie zu ermitteln, beispielsweise wiederum als Polygonzug, z. B. mittels einer Vektorkette. In jedem Fall ergeben sich die vorhandenen Positionen der vorhandenen Küstenlinie aus den Punkten, die auf der Küstenlinie liegen. Z. B. wird festgelegt, in welchem Abstand zueinander auf dem Polygonzug die vorhandenen Positionen der vorhandenen Küstenlinie liegen sollen, die durch Auswertung der Fernerkundungsdaten verschoben werden, um die geänderte, verbesserte Küstenlinie zu erhalten.

Nachteilhaft bei diesem Verfahren ist die Notwendigkeit, zusätzliche Daten durch Fernerkundung zu beschaffen.

Durch Verwendung von OSM-Daten als Rohdaten für Navigationssysteme können Lizenzgebühren gespart werden, und Navigationsprodukte können billiger angeboten werden. Daraus ergibt sich allerdings die Notwendigkeit, auch die Gewässerflächen in die Navigationsdaten mit aufzunehmen, um aufkommenden Kundenvorstellungen über die vollständige Darstellung in Navigationssystemen basierend auf OSM-Daten zu begegnen.

Sowohl bei kommerziell erhältlichen Rohdaten als auch bei den frei verfügbaren OSM-Daten ist damit eine Vorverarbeitung notwendig, um die kostenfrei bereitgestellten Daten in ein für Navigationssysteme geeignetes Format zu überführen. Bei der Vorverarbeitung von OSM-Daten muss nun als zusätzlicher Schritt die Ermittlung von Gewässerflächen erfolgen.

### OFFENBARUNG DER ERFINDUNG

Aufgabe der Erfindung ist die Weitebildung eines Verfahrens zur Ermittlung von Gewässerflächen aus den in den OSM-Daten erhältlichen Informationen. Insbesondere sollen aus den in OSM-Daten enthaltenen Informationen gewünschte Gewässerflächen für Navigationsdaten ermittelt werden. Das Verfahren zur Ermittlung der Gewässerflächen und damit der Küstenlinien soll möglichst einfach und ohne zusätzlichen Kostenaufwand wie z.B. eine Fernerkundung ausgeführt werden können.

Diese Aufgabe wird ausgehend von einem Verfahren zur Ermittlung von Gewässerflächen gemäß Anspruch 1 in Verbindung mit den kennzeichnenden Merkmalen gelöst. Vorteilhafte Weiterbildungen der Erfindung sind in den abhängigen Ansprüchen angegeben.

Erfindungsgemäß sieht das Verfahren wenigstens die folgenden Schritte vor: Einlesen aller Daten aus der OSM-Datenquelle, die ganz oder teilweise in einem definierten rechteckigen Einlesegebiet liegen, anschließendes Abschneiden aller aus diesem Gebiet hinausragenden Flächen und Küstenlinien, wobei die Küstenlinien hierzu jeweils am Einleserand des Einlesegebietes aufgetrennt werden, anschließendes Verfolgen der zuvor aus mehreren einzelnen Küstenlinienstücken bestehenden Küstenlinie, darauf folgendes Zusammensetzen der einzelnen Küstenlinienstücke zu einer durchgängigen Line, wobei die durchgängige Küstenlinie am Rand des Einlesegebietes beginnt und endet, und es folgt schließlich ein Vervollständigen der Küstenlinie mit den Randlinien des Einleserandes so weit, dass sich ein geschlossener Ring aus Küstenlinien und dem Einleserand ergibt, der die Gewässerfläche umschließt.

Damit erfolgt die Vorverarbeitung der Rohdaten für Navigationssysteme nicht in einem einzigen Schritt, sondern kann mit Vorteil parallel auf mehreren Rechnern gleichzeitig durchgeführt werden, insbesondere, da die Datenmenge für eine Region, also z.B. für Deutschland, nicht performant zu verarbeiten ist.

Um die Rohdaten parallel auf mehreren Rechnern zu verarbeiten, werden diese geeignet partitioniert. Bei OSM-Daten erfolgt diese Partitionierung in einem vorzugsweise rechteckigen Raster. Viele kleine rechteckige Gebiete haben den Vorteil, dass jedes einzelne Gebiet sich schnell verarbeiten lässt, dafür muss man aber am Rand der Gebiete Sonderfallbetrachtungen durchführen, die ohne das erfindungsgemäße Verfahren sehr aufwendig sind und oft mit zeitlichem, personellem Aufwand durchgeführt werden müssen.

Bei wenigen großen Gebieten hingegen sind Vor-und Nachteile genau anders herum gelagert als bei vielen kleinen Gebieten. Als Kompromiss können beispielsweise Gebiete mit 0,4° West-Ost-Ausdehnung und 0,2° Nord-Süd-Ausdehnung für die Region Deutschland verwendet werden, die die definierten rechteckigen Einlesegebiete bilden.

Durch die Verwendung und die erfindungsgemäße Verarbeitung der OSM-Daten als Rohdaten für Navigationssysteme können Lizenzgebühren gespart werden. Damit können Navigationsprodukte billiger angeboten werden.

Generell bezieht sich die Erfindung auf jede Form von Gewässern, also beispielsweise auf Binnengewässer, also beispielsweise Seen und auf sämtliche Meere. Binnengewässer sind in OSM-Daten regelmäßig hinsichtlich ihrer Randlinien bereits vollständig verzeichnet, wohingegen die Meere hinsichtlich ihrer Küstenlinien noch nicht vollständig erfasst sind.

Unter dem Begriff der Meere oder Ozeane werden im Rahmen der vorliegenden Erfindung ebenfalls alle Gewässer verstanden, also Binnengewässer und Meere oder Ozeane, beispielsweise der Atlantik, der Pazifik, der indische Ozean, die Südsee und dergleichen.

Ist die Gewässerfläche erstellt worden, kann sie genauso weiterverarbeitet werden wie alle anderen Flächen, die direkt aus den Rohdaten eingelesen wurden. Auf diese Weise kann für alle Einlesegebiete, die eine Küstenlinie enthalten, das fehlende Gewässer berechnet werden. Bei Einlesegebieten, die keine Küstenlinie enthalten, kann auf diese Art kein Gewässer berechnet werden. Da im Navigationssystem aber üblicherweise meist ein kleines Gebiet in der näheren Umgebung des Fahrzeugs dargestellt wird, fällt das weit von der Küste entfernte fehlende Gewässer meist nicht auf.

Die Erfindung ist weiterhin gerichtet auf ein Computerprogrammprodukt zur Ausführung eines Verfahrens, auf eine maschinenlesbare, insbesondere computerlesbare Datenstruktur erzeugt durch ein Verfahren, auf ein Gerät zur Ausführung eines Verfahrens und auf ein Navigationsgerät beinhaltend ein Gerät zur Ausführung eines Verfahrens zur Ermittlung von Gewässerflächen auf Grundlage von OSM-Daten, wobei das Verfahren wenigstens die folgenden Schritte aufweist: Einlesen aller Daten aus der OSM-Datenquelle, die ganz oder teilweise in einem definierten rechteckigen Einlesegebiet liegen, Abschneiden aller aus diesem Gebiet hinausragenden Flächen und Küstenlinien, wobei die Küstenlinien hierzu jeweils am Einleserand des Einlesegebietes aufgetrennt werden, Verfolgen der zuvor aus mehreren einzelnen Küstenlinienstücken bestehenden Küstenlinie, Zusammensetzen der einzelnen Küstenlinienstücke zu einer durchgängigen Küstenlinie, wobei die durchgängige Küstenlinie am Rand des Einlesegebietes beginnt und endet und Vervollständigen der Küstenlinie mit den Randlinien des Einleserandes so weit, dass sich ein geschlossener Ring aus Küstenlinien und dem Einleserand ergibt, der die Gewässerfläche umschließt.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: ein definiertes rechteckiges Gebiet an der deutschen Ostseeküste in der Nähe von Lübeck mit einem Flächenanteil des Gewässers,
- Figur 2: das relativ zu dem Gebiet in Figur 1 östlich benachbarte Gebiet in der Nähe von Wismar mit dem zusätzlichen rechteckigen Rand des Einlesegebietes,
- Figur 3: ein durch Vervollständigung eines Küstenlinienzuges gebildeter geschlossener Ring mit einem Teil des Gewässers, der sich innerhalb des Einlesegebietes befindet und
- Figur 4: eine Ansicht der Karte mit einem Gewässer, das in den fertigen Navigationsdaten an der Küste schraffiert gezeigt ist.

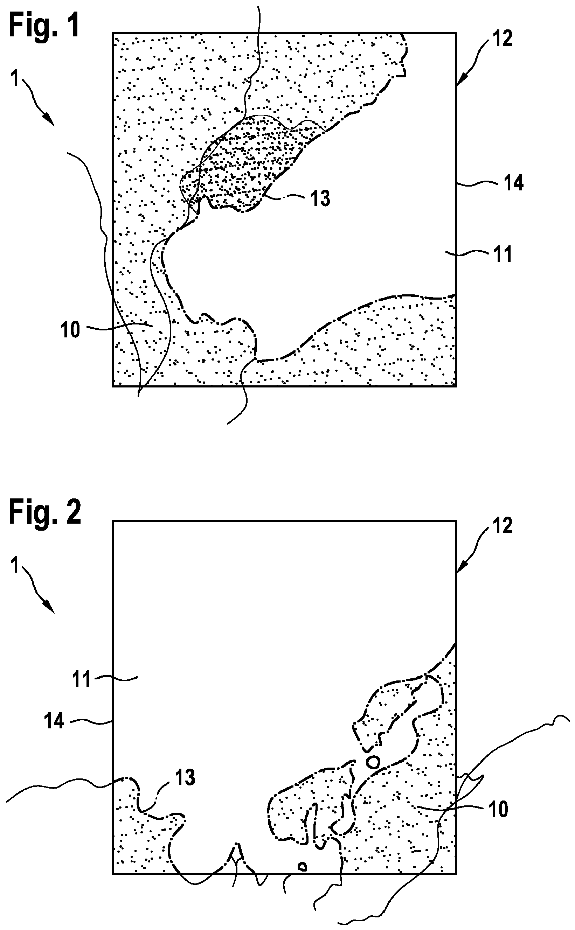

In Figur 1 ist eine Karte 1 mit einer Landfläche 10 und mit einer Gewässerfläche 11 gezeigt. Aus der Karte 1 ist ein definiertes rechteckiges Einlesegebiet 12 ausgeschnitten gezeigt. Die Karte 1 zeigt die Darstellung, die auf Grundlage von OSM-Daten zunächst ohne Verarbeitung möglich ist. Eine Küstenlinie 13 ist dabei nicht der Teil bzw. der Rand einer Fläche, weil es in den OSM-Daten keine Gewässerflächen 11 gibt. Um nun aus den vorhandenen Informationen die Gewässerfläche 11 zu berechnen, muss zusätzlich noch der Rand 14 des rechteckigen Einlesegebietes 12 eingezeichnet werden.

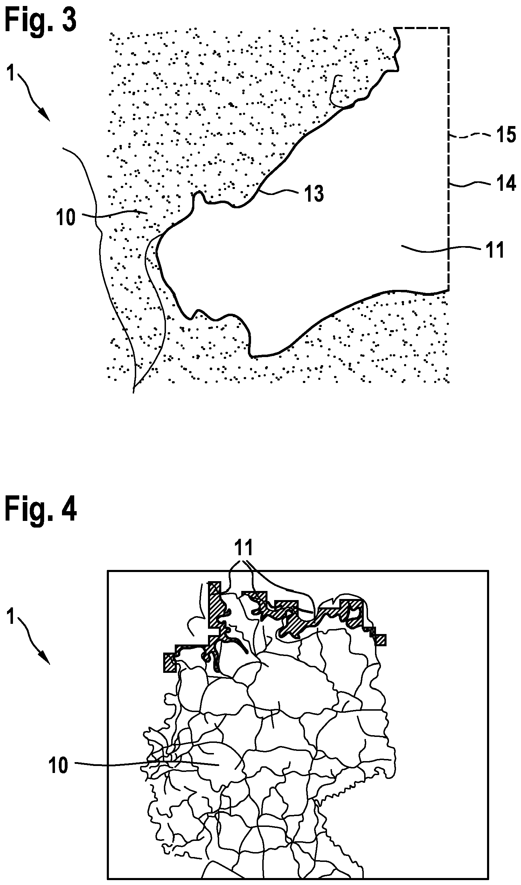

Um die Rohdaten aus der OSM-Datenquelle parallel auf mehreren Rechnern zu verarbeiten, werden diese geeignet partitioniert. Bei OSM-Daten erfolgt diese Partitionierung in einem vorzugsweise rechteckigen Raster, sodass viele kleine rechteckige Einlesegebiete 12 entstehen, von denen in Figur 1 eines gezeigt ist. Die rechteckigen Einlesegebiete 12 haben den Vorteil, dass jedes einzelne Einlesegebiet 12 sich schnell verarbeiten lässt, dafür müssen aber am Rand 14 der Einlesegebiete 12 Sonderfallbetrachtungen durchgeführt werden, die ohne das erfindungsgemäße Verfahren sehr aufwendig sind und oft händisch durchgeführt werden müssen. Daher wird in Zusammenhang mit den Figuren 2 und 3 das erfindungsgemäße Verfahren nachfolgend beschrieben.

Figur 2 zeigt ein Einlesegebiet 12, das relativ zum Einlesegebiet 12 in Bild 1 östlich benachbart gelegen ist, und das Einlesegebiet 12 bildet einen Beispielausschnitt in der Nähe von Wismar. Der linke Rand 14 fällt dabei zusammen mit dem rechten Rand 14 des Einlesegebietes 12 in Figur 1. Eine Küstenlinie 13 ist gemäß dieser OSM-Spezifikation so gerichtet, dass die Landfläche 10 immer links und die Gewässerfläche 11 immer rechts von der Küstenlinie 13 liegt. Aus den so eingelesenen Küstenlinien 13 und dem selbst erzeugten Rand des rechteckigen Einlesegebietes 12 wird nun eine Fläche ermittelt, welche den Teil des Gewässers repräsentiert, der sich innerhalb des rechteckigen Einlesegebietes 12 befindet.

Figur 3 zeigt einen durch Vervollständigung eines Küstenlinienzuges gebildeten geschlossenen Ring 15, bestehend aus der Küstenlinie 13 und dem Rand 14 des Ausschnittes des Einlesegebietes 12 mit einem Teil des Gewässers, der sich innerhalb des Einlesegebietes 12 befindet.

Das Verfahren hierfür wird mit den folgenden Schritten vorgenommen: Einlesen aller Daten aus der OSM-Datenquelle, die ganz oder teilweise in einem definierten rechteckigen Einlesegebiet 12 liegen. Anschließend erfolgt ein Abschneiden aller aus diesem Einlesegebiet 12 hinausragenden Flächen und Küstenlinien, wobei die Küstenlinien hierzu jeweils am Einleserand 14 des Einlesegebietes 12 aufgetrennt werden. Anschließend wird die zuvor aus mehreren einzelnen Küstenlinienstücken bestehende Küstenlinie 13 verfolgt, und es folgt ein Zusammensetzen der einzelnen Küstenlinienstücke zu einer durchgängigen Line, wobei die durchgängige Küstenlinie am Rand 14 des Einlesegebietes 12 beginnt und endet, und es wird eine Vervollständigung der Küstenlinie 13 mit den Randlinien 14 des Einlesegebietes 12 so weit vorgenommen, dass sich der geschlossene Ring 15 aus Küstenlinien 13 und Gebietsrandlinien ergibt.

In Figur 4 ist eine Ansicht der Karte 1 mit Gewässerflächen 11 nördlich über den Landflächen 10 gezeigt, die in den fertigen Navigationsdaten an der Küste schraffiert gezeigt ist. Da im Navigationssystem aber üblicherweise meist ein nur kleines Gebiet in der näheren Umgebung des Fahrzeugs dargestellt wird, fällt das weit von der Küste entfernt fehlende Gewässer meist nicht auf.

In allen Navigationsgeräten müssen Navigationsdaten vorhanden sein, die aber jeweils in einem für das Navigationsgerät angepassten Format vorliegen. Ob diese Daten aus kommerziellen oder aus OSM-Daten entstanden sind, lässt sich ihnen nicht unbedingt ansehen. Man kann zwar erkennen, ob Gewässerflächen vorhanden sind, aber nicht, wie diese erstellt wurden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiven Einzelheiten, räumliche Anordnungen und Verfahrensschritte, können sowohl für sich als auch in den verschiedensten Kombinationen erfindungswesentlich sein.

## Patentansprüche

1. Verfahren zur Ermittlung von Gewässerflächen (11) auf Grundlage von OSM-Daten, wobei das Verfahren wenigstens die folgenden Schritte aufweist:
- Einlesen aller Daten aus der OSM-Datenquelle, die ganz oder teilweise in einem definierten rechteckigen Einlesegebiet (12) liegen,
- Abschneiden aller aus diesem Gebiet (12) hinausragenden Flächen und Küstenlinien, wobei die Küstenlinien hierzu jeweils am Einleserand (14) des Einlesegebietes (12) aufgetrennt werden,
- Verfolgen der zuvor aus mehreren einzelnen Küstenlinienstücken bestehenden Küstenlinie (13),
- Zusammensetzen der einzelnen Küstenlinienstücke zu einer durchgängigen Küstenlinie (13), wobei die durchgängige Küstenlinie (13) am Rand des Einlesegebietes (12) beginnt und endet und
- Vervollständigen der Küstenlinie (13) mit den Randlinien des Einleserandes (14) so weit, dass sich ein geschlossener Ring (15) aus Küstenlinien (13) und dem Einleserand (14) ergibt, der die Gewässerfläche (11) umschließt.

2. Verfahren nach Anspruch 1, **dadurch gekennzeichnet, dass** für die Vervollständigung des geschlossenen Ringes (15) am Ende einer Küstenlinie die am nächsten rechts liegende Küstenlinie gewählt wird.

3. Verfahren nach Anspruch 2, **dadurch gekennzeichnet, dass** Nachbarlinien der einzelnen Küstenlinienstücke an den Küstenlinienendpunkten nach den von diesen Punkten ausgehenden Winkeln sortiert werden.

4. Verfahren nach Anspruch 1 bis 3, **dadurch gekennzeichnet, dass** der durch Vervollständigung des Küstenlinienzuges gebildete geschlossene Ring (15) den Teil des Gewässers beschreibt, der sich innerhalb dieses Einlesegebietes (12) befindet.

5. Verfahren nach einem der vorgenannten Ansprüche, **dadurch gekennzeichnet, dass** das definierte rechteckige Einlesegebiet (12) mit 0,4° West-Ost-Ausdehnung und 0,2° Nord-Süd-Ausdehnung für die Region Deutschland verwendet wird.

6. Verfahren nach einem der vorgenannten Ansprüche, **dadurch gekennzeichnet, dass** der Einlesezyklus der Rohdaten mit Küstenlinien (13) eingegliedert wird in sämtliche der Einlesezyklen der Kartendaten ohne Küstenlinien (13).

7. Computerprogrammprodukt zur Ausführung eines Verfahrens zur Ermittlung von Gewässerflächen (11) auf Grundlage von OSM-Daten, wobei das Verfahren wenigstens die folgenden Schritte aufweist: Einlesen aller Daten aus der OSM-Datenquelle, die ganz oder teilweise in einem definierten rechteckigen Einlesegebiet (12) liegen, Abschneiden aller aus diesem Gebiet (12) hinausragenden Flächen und Küstenlinien, wobei die Küstenlinien hierzu jeweils am Einleserand (14) des Einlesegebietes (12) aufgetrennt werden, Verfolgen der zuvor aus mehreren einzelnen Küstenlinienstücken bestehenden Küstenlinie (13), Zusammensetzen der einzelnen Küstenlinienstücke zu einer durchgängigen Küstenlinie (13), wobei die durchgängige Küstenlinie (13) am Rand des Einlesegebietes (12) beginnt und endet und Vervollständigen der Küstenlinie (13) mit den Randlinien des Einleserandes (14) so weit, dass sich ein geschlossener Ring (15) aus Küstenlinien (13) und dem Einleserand (14) ergibt, der die Gewässerfläche (11) umschließt.

8. Maschinenlesbare, insbesondere computerlesbare Datenstruktur erzeugt durch ein Verfahren zur Ermittlung von Gewässerflächen (11) auf Grundlage von OSM-Daten, wobei das Verfahren wenigstens die folgenden Schritte aufweist: Einlesen aller Daten aus der OSM-Datenquelle, die ganz oder teilweise in einem definierten rechteckigen Einlesegebiet (12) liegen, Abschneiden aller aus diesem Gebiet (12) hinausragenden Flächen und Küstenlinien, wobei die Küstenlinien hierzu jeweils am Einleserand (14) des Einlesegebietes (12) aufgetrennt werden, Verfolgen der zuvor aus mehreren einzelnen Küstenlinienstücken bestehenden Küstenlinie (13), Zusammensetzen der einzelnen Küstenlinienstücke zu einer durchgängigen Küstenlinie (13), wobei die durchgängige Küstenlinie (13) am Rand des Einlesegebietes (12) beginnt und endet und Vervollständigen der Küstenlinie (13) mit den Randlinien des Einleserandes (14) so weit, dass sich ein geschlossener Ring (15) aus Küstenlinien (13) und dem Einleserand (14) ergibt, der die Gewässerfläche (11) umschließt.

9. Gerät zur Ausführung eines Verfahrens zur Ermittlung von Gewässerflächen (11) auf Grundlage von OSM-Daten, wobei das Verfahren wenigstens die folgenden Schritte aufweist: Einlesen aller Daten aus der OSM-Datenquelle, die ganz oder teilweise in einem definierten rechteckigen Einlesegebiet (12) liegen, Abschneiden aller aus diesem Gebiet (12) hinausragenden Flächen und Küstenlinien, wobei die Küstenlinien hierzu jeweils am Einleserand (14) des Einlesegebietes (12) aufgetrennt werden, Verfolgen der zuvor aus mehreren einzelnen Küstenlinienstücken bestehenden Küstenlinie (13), Zusammensetzen der einzelnen Küstenlinienstücke zu einer durchgängigen Küstenlinie (13), wobei die durchgängige Küstenlinie (13) am Rand des Einlesegebietes (12) beginnt und endet und Vervollständigen der Küstenlinie (13) mit den Randlinien des Einleserandes (14) so weit, dass sich ein geschlossener Ring (15) aus Küstenlinien (13) und dem Einleserand (14) ergibt, der die Gewässerfläche (11) umschließt.

10. Navigationsgerät beinhaltend ein Gerät zur Ausführung eines Verfahrens zur Ermittlung von Gewässerflächen (11) auf Grundlage von OSM-Daten, wobei das Verfahren wenigstens die folgenden Schritte aufweist: Einlesen aller Daten aus der OSM-Datenquelle, die ganz oder teilweise in einem definierten rechteckigen Einlesegebiet (12) liegen, Abschneiden aller aus diesem Gebiet (12) hinausragenden Flächen und Küstenlinien, wobei die Küstenlinien hierzu jeweils am Einleserand (14) des Einlesegebietes (12) aufgetrennt werden, Verfolgen der zuvor aus mehreren einzelnen Küstenlinienstücken bestehenden Küstenlinie (13), Zusammensetzen der einzelnen Küstenlinienstücke zu einer durchgängigen Küstenlinie (13), wobei die durchgängige Küstenlinie (13) am Rand des Einlesegebietes (12) beginnt und endet und Vervollständigen der Küstenlinie (13) mit den Randlinien des Einleserandes (14) so weit, dass sich ein geschlossener Ring (15) aus Küstenlinien (13) und dem Einleserand (14) ergibt, der die Gewässerfläche (11) umschließt.
